(19) Europäisches Patentamt
European Patent Office
Office européen des brevets

(11) EP 3 444 299 A1

# (12) EUROPEAN PATENT APPLICATION

published in accordance with Art. 153(4) EPC

(43) Date of publication:
**20.02.2019 Bulletin 2019/08**

(21) Application number: **17782481.0**

(22) Date of filing: **13.04.2017**

(51) Int Cl.:
***C08L 7/00*** *(2006.01)* ***C08K 3/06*** *(2006.01)*
***C08L 9/00*** *(2006.01)*

(86) International application number:
**PCT/JP2017/015170**

(87) International publication number:
**WO 2017/179668 (19.10.2017 Gazette 2017/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.04.2016 JP 2016082238**

(71) Applicant: **The Yokohama Rubber Co., Ltd.**
**Minato-ku**
**Tokyo 105-8685 (JP)**

(72) Inventor: **SAKAI Tomoyuki**
**Hiratsuka City**
**Kanagawa 254-8601 (JP)**

(74) Representative: **Grünecker Patent- und Rechtsanwälte**
**PartG mbB**
**Leopoldstraße 4**
**80802 München (DE)**

## (54) RUBBER COMPOSITION, VULCANIZED RUBBER PRODUCT AND METHOD FOR PRODUCING VULCANIZED RUBBER PRODUCT

(57) An object of the present invention is to provide a rubber composition wherein a vulcanization reaction sufficiently proceeds even in a case where the content of the zinc compound is reduced, a vulcanized rubber product including the rubber composition, and a method of producing thereof. The rubber composition of the present invention includes 100 parts by mass of a diene rubber and from 0.01 to 10 parts by mass of a sulfur allotrope having from 3 to 6 atoms.

EP 3 444 299 A1

## Description

### Technical Field

The present invention relates to a rubber composition, a vulcanized rubber product, and a method of producing a vulcanized rubber product.

### Background Art

Rubber compositions including a diene rubber, zinc oxide (flowers of zinc), a vulcanization accelerator, and a vulcanizing agent are known. The rubber compositions are quickly crosslinked (vulcanized) by heating, and therefore have been utilized for producing various vulcanized rubber products.

For example, Patent Document 1 describes "an anti-vibration rubber composition including at least one selected from the group consisting of a diene rubber and an ethylene-propylene-diene copolymer as a rubber component and containing from 1 to 20 parts by weight of fine particle zinc oxide having a specific surface area measured by the BET method of 10 to 200 $m^2/g$ per 100 parts by weight of the rubber component."

### Citation List

### Patent Literature

Patent Document 1: JP 2006-193621 A

### Summary of Invention

### Technical Problem

Recent attention has been focused on the toxicity of zinc to fishes, and the rubber compositions of reduced zinc content have been demanded. The present inventors produced a rubber composition in which fine particle zinc oxide (zinc oxide) are removed from the rubber composition described in Patent Document 1 and vulcanized the rubber composition, and found that vulcanization did not sufficiently proceed within a predetermined period of time.

Thus, an object of the present invention is to provide a rubber composition, with which a vulcanization reaction sufficiently proceeds even in a case where the content of the zinc compound is reduced, a vulcanized rubber product including the rubber composition, and a method of producing thereof.

### Solution to Problem

As a result of diligent research to solve the problem described above, the inventors of the present invention discovered that the problem can be solved by a rubber composition including 100 parts by mass of a diene rubber and from 0.01 to 10 parts by mass of a sulfur allotrope having from 3 to 6 atoms.

That is, the inventors discovered that the problem described above can be solved by the following configuration.

(1) A rubber composition including 100 parts by mass of a diene rubber and from 0.01 to 10 parts by mass of a sulfur allotrope having from 3 to 6 atoms.
(2) The rubber composition according to (1), wherein the sulfur allotrope is present in at least one selected from the group consisting of a co-crystal, a complex, and an inclusion compound.
(3) The rubber composition according to (2), wherein the co-crystal is a co-crystal formed by reacting a compound represented by Formula (1) and at least one selected from the group consisting of iodine, iodine monochloride, iodine monobromide, and iodine trichloride.
(4) The rubber composition according to any one of (1) to (3), wherein the sulfur allotrope is a cyclic sulfur.
(5) The rubber composition according to any one of (1) to (4), wherein the number of atoms in the sulfur allotrope is 6.
(6) The rubber composition according to any one of (1) to (5), further including from 1 to 150 parts by mass of at least one selected from the group consisting of carbon black and silica per 100 parts by mass of the diene rubber.
(7) A vulcanized rubber product obtained by using the rubber composition described in any one of (1) to (6) .
(8) A method for producing a vulcanized rubber product, the method including:

reacting a compound represented by Formula (1) and at least one selected from the group consisting of iodine,

iodine monochloride, iodine monobromide, and iodine trichloride to obtain a sulfur allotrope present in a co-crystal;
mixing the sulfur allotrope present in a co-crystal and a diene rubber to obtain a mixture of the diene rubber and the sulfur allotrope present in a co-crystal; and
heating the mixture to obtain a vulcanized diene rubber product.

Advantageous Effects of Invention

An object of the present invention is to provide a rubber composition wherein a vulcanization reaction sufficiently proceeds even in a case where the content of a zinc compound is reduced, a vulcanized rubber product including the rubber composition, and a method of producing thereof.

Brief Description of Drawing

FIG. 1 is a graph showing the measurement results of the change in rheometer torque with respect to vulcanization time for a rubber composition.

Description of Embodiments

Embodiments of the present invention are described in detail below with reference to the drawings.
Although the components described below may be described based on representative embodiments of the present invention, the present invention is not limited to such embodiments.
Note that in the present specification, numerical ranges indicated using "(from)... to..." include the former number as the lower limit value and the later number as the upper limit value.

Rubber composition

A first embodiment of the present invention is a rubber composition including 100 parts by mass of a diene rubber and from 0.01 to 10 parts by mass of a sulfur allotrope having from 3 to 6 atoms. One of the features of the rubber composition is the inclusion of a predetermined amount of a sulfur allotrope having from 3 to 6 atoms in the rubber composition. Although the mechanism that the rubber composition of the above-described feature provides effects is not necessarily clear, the present inventors assume as follows. Not that the assumption described below will not limit the mechanism that the rubber composition provides effects.
The rubber composition includes a predetermined amount of a sulfur allotrope having from 3 to 6 atoms. Sulfur is known to have many allotropes as an element. A sulfur molecule compounded in a rubber composition for the purpose of vulcanization is typically a sulfur molecule having 8 sulfur atoms (hereinafter, also referred to as "$S_8$"). $S_8$ is thermally stable and a rubber composition including $S_8$ does not easily react by heating during kneading and forming processes. A rubber composition including $S_8$ is therefore excellent from the perspective of offering sufficient scorch time.
On the contrary, in a case where $S_8$ is added to a rubber composition including neither zinc oxide nor a vulcanization accelerator, there is a problem in that a vulcanization reaction does not sufficiently proceed within a predetermined period of time (for example, the condition described in Examples below) in a case where vulcanization is performed under a predetermined condition (for example, the condition described in Examples below).
FIG. 1 is a graph showing the measurement results of change in rheometer torque with respect to vulcanization time for a rubber composition. In FIG. 1, the horizontal axis represents vulcanization time (minute) and the vertical axis represents rheometer torque (dN·m). It is found that, in the vulcanization curve 101 for the rubber composition including a predetermined amount of the sulfur allotrope having from 3 to 6 atoms(Example 1 described later), the rheometer torque sufficiently increases in a predetermined period of time. Meanwhile, it is found that, in the vulcanization curve 103 for the rubber composition including neither zinc oxide nor vulcanization accelerator but including $S_8$ (Comparative Example 3 described later), the rheometer torque does not increase in a predetermined period of time, that is, the vulcanization reaction does not proceed.
Comparing the vulcanization curve 101 of the above-described rubber composition with the vulcanization curve 102 of the rubber composition including $S_8$, zinc oxide, and a vulcanization accelerator (Reference Example 2 described later), the amount of change in the rheometer torque in a predetermined period of time is greater in the vulcanization curve 101 than the vulcanization curve 102. Accordingly, it is found that the above-described rubber composition exhibits higher crosslinking density ultimately.
The rubber composition includes a predetermined amount of the sulfur allotrope having from 3 to 6 atoms, which has higher reactivity than $S_8$. Thus, it is assumed that, even in a case where the content of the zinc compound is reduced, a vulcanization reaction sufficiently proceeds in a predetermined period of time.

Sulfur allotrope having from 3 to 6 atoms

The rubber composition includes a sulfur allotrope having from 3 to 6 atoms.

The state of the sulfur allotrope having from 3 to 6 atoms is not particularly limited and a sulfur allotrope having from 3 to 6 atoms in the form of solid, liquid, or gas may be used for the rubber composition. Among these, a sulfur allotrope having from 3 to 6 atoms in the form of solid is preferred from the perspective that the sulfur allotrope having from 3 to 6 atoms has superior handling property. Note that, in the present specification, the sulfur allotrope refers to a "molecule of sulfur unit including sulfur atoms."

The content of the sulfur allotrope having from 3 to 6 atoms in the rubber composition is preferably from 0.01 to 10 parts by mass per 100 parts by mass of the diene rubber. In particular, the content of the sulfur allotrope having from 3 to 6 atoms in the rubber composition is preferably from 0.01 to 5, more preferably not greater than 3, and even more preferably not greater than 2 from the perspective that the rubber composition has superior mechanical properties.

In a case where the content of the sulfur allotrope having from 3 to 6 atoms in the rubber composition is greater than 0.01, the rubber composition has superior mechanical stress. In a case where the content of the sulfur allotrope having from 3 to 6 atoms in the rubber composition is less than 2, the rubber composition has superior toughness.

The number of atoms in the sulfur allotrope is from 3 to 6. In particular, the number of atoms in the sulfur allotrope is preferably from 3 to 6, more preferably from 4 to 6, and even more preferably 6, from the perspective that the sulfur allotrope has superior reactivity.

The molecular structure of the sulfur allotrope is not particularly limited and a chain sulfur or a cyclic sulfur may be used for the rubber composition. Among these, a cyclic sulfur is preferred and a cyclic sulfur having 6 atoms (hereinafter, also referred to as "$S_6$") is more preferred, from the perspective that the sulfur allotrope has superior storage stability and/or that the rubber composition including the sulfur allotrope offers superior scorch time.

Note that, one type of the sulfur allotrope may be used alone, or two or more types of the sulfur allotropes having the different number of atoms and/or a molecular structure may be used in combination. In a case where two or more types of the sulfur allotropes are used in combination, the total amount of the sulfur allotropes is within the range above. The form of the sulfur allotropes included in the mixture of two or more types of the sulfur allotropes is as described above.

Note that, in a case where two or more types of the sulfur allotropes are used in combination, the rubber composition preferably includes cyclic $S_6$ and the content of $S_6$ is preferably from 30 to 80 mass% in the total amount of the sulfur allotropes.

The production method of the sulfur allotrope is not particularly limited, and a known method can be used.

For example, cyclic $S_6$ can be obtained by adding hydrochloric acid to sodium thiosulphate. Cyclic $S_6$ can also be synthesized at a high yield by the reaction of sodium tetrasulfide and disulfur dichloride.

The sulfur allotrope may be present in at least one selected from the group consisting of a co-crystal, a complex, and an inclusion compound. The sulfur allotrope having from 3 to 6 atoms typically exhibits particularly high reactivity compared to $S_8$. When the sulfur allotrope is present in at least one selected from the group consisting of a co-crystal, a complex, and an inclusion compound, the sulfur allotrope having from 3 to 6 atoms has superior storage stability while maintaining the high reactivity described above. A rubber composition including the sulfur allotrope having from 3 to 6 atoms offers superior scorch time. Note that, in the present specification, the co-crystal refers to a crystalline complex bonded via the interaction of non-covalent bonding. Examples of the non-covalent bonding include hydrogen bonding and halogen bonding.

The co-crystal including a sulfur allotrope can be produced by melt crystallization, recrystallisation from a solvent, or the like. The components other than the sulfur allotrope in the co-crystal are not particularly limited, but the rubber composition preferably includes no zinc.

The complex including the sulfur allotrope is not particularly limited, and a known complex including the sulfur allotrope can be used.

As the complex including the sulfur allotrope, a complex can be employed in which $S_3$ or $S_6$ is stably present in the pores of the gaps between organic iodine zinc complexes (zinc content is approximately 10 mass%), for example. Note that, the production method of the complex described above is described in Journal of the Crystallographic Society of Japan, Vol.56, No.5, pp.323 (2014). Note that, in a case where the sulfur allotrope is present in the complex, the structure of sulfur includes chain $S_3$, cyclic $S_6$, or the like.

The components other than the sulfur allotrope in the complex are not particularly limited, but the zinc content is preferably not greater than 10 mass% and the rubber composition more preferably includes no zinc.

The inclusion compound including the sulfur allotrope is not particularly limited as long as the sulfur allotrope can be captured in the inclusion compound, and a known inclusion compound including the sulfur allotrope can be used. Examples of the inclusion compound include cyclodextrin and crown ether. The method of producing the inclusion compound including a sulfur allotrope is not limited. For example, the inclusion compound can be produced by adding and dispersing an inclusion compound to a solvent to prepare a slurry, and then adding and mixing a sulfur allotrope to

the slurry.

In a case where the sulfur allotrope is present in at least one selected from the group consisting of a co-crystal, a complex, and an inclusion compound, the content of the co-crystal, the complex, and the inclusion compound in the rubber composition is not particularly limited. Typically, the content is preferably from 0.02 to 200 parts by mass per 100 parts by mass of the diene rubber. In particular, the content of the co-crystal, the complex, and the inclusion compound is preferably from 0.1 to 50 parts by mass, and more preferably from 0.1 to 10 parts by mass per 100 parts by mass of the diene rubber, from the perspective of better performance in terms of elongation at break and breaking strength of the vulcanized product.

In a case where the sulfur allotrope is present in at least one selected from the group consisting of the co-crystal, the complex, and the inclusion compound, the sulfur allotrope content of the co-crystal, the complex, and the inclusion compound to the total mass is from 5 to 50 mass%, preferably from 10 to 50 mass%, and more preferably from 10 to 30 mass%.

Note that, in a case where two or more types of co-crystal, complex, and inclusion compound are used in combination, the total amount thereof is preferably within the range above.

Note that, the sulfur allotrope is preferably present in the co-crystal produced by the following method, from the perspective that the vulcanization reaction of the rubber composition easily proceeds even in a case where the content of the zinc compound is reduced.

Preferred embodiment of method of producing sulfur allotrope present in co-crystal

A preferred embodiment of the method of producing a sulfur allotrope present in a co-crystal includes the following steps:

Step A: reacting a compound represented by Formula (1) and at least one selected from the group consisting of iodine, iodine monochloride, iodine monobromide, and iodine trichloride to obtain a reaction solution;
Step B: precipitating a co-crystal from the reaction solution; and
Step C: separating, from the reaction solution, the co-crystal precipitated from the reaction solution by filtration to obtain a sulfur allotrope present in the co-crystal.

A preferred embodiment of the method of producing a sulfur allotrope present in a co-crystal may include the following step D after step C as desired.

Step D: purifying the co-crystal

Hereinafter, a preferred embodiment is described for each step.

Step A

Step A is a step of reacting a compound represented by Formula (1) and at least one selected from the group consisting of iodine, iodine monochloride, iodine monobromide, and iodine trichloride to obtain a reaction solution.

[Chemical Formula 1]

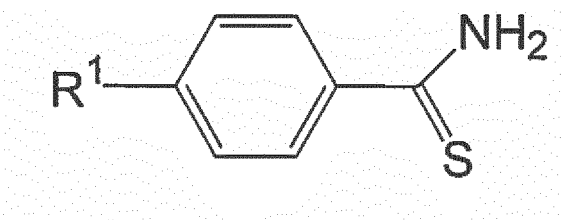

(1)

In Formula (1), $R^1$ represents a monovalent organic group. The monovalent organic group is not particularly limited, but is preferably a hydrogen atom, an alkyl group, an oxyalkylene group, an amino group, an aryl group, or a group represented by $-NR^2R^3$ ($R^2$ and $R^3$ are each independently a hydrogen atom or an alkyl group), and is more preferably a hydrogen atom, an alkyl group, an oxyalkylene group, an amino group, or a group represented by $-NR^2R^3$.

In a case where $R^1$ is an alkyl group, the number of carbons is not particularly limited, but is preferably not

greater than 8. In a case where $R^1$ is an oxyalkylene group, the number of carbons is not particularly limited, but is preferably not greater than 4.

$R^2$ and $R^3$ are preferably an alkyl group, and are more preferably an alkyl group having not greater than 4 carbons.

Note that, the specific examples of the compound represented by Formula (1) include thiobenzamide, 4-methoxybenzothioamide, and 4-(dimethylamino)benzothioamide.

Iodine is preferable as at least one selected from the group consisting of iodine, iodine monochloride, iodine monobromide, and iodine trichloride (hereinafter, also referred to as "iodine or iodine compound"). One type of iodine or iodine compound may be used alone, or two or more types of these may be used in combination.

The reaction solution preferably includes an organic solvent. The organic solvent is preferably an organic solvent that can dissolve the compound represented by Formula (1), and examples of the organic solvent include benzene and chloroform.

The method of obtaining the reaction solution is not particularly limited. Examples of the method include dissolving a compound represented by Formula (1) in the organic solvent to obtain a solution of the compound represented by Formula (1); adding iodine or an iodine compound to the solution to obtain a liquid mixture; and refluxing the liquid mixture. Note that, mixing time is preferably from 1 minute to 24 hours, and the temperature of the solution during mixing is preferably from 0 to 35°C. Note that reflux time is preferably from 1 to 24 hours.

The content of the compound represented by Formula (1) included in the solution of the compound represented by Formula (1) is not particularly limited. The content is preferably from 1 to 10 g per 100 mL of the solution, from the perspective of enhancing the yield of the sulfur allotrope present in the co-crystal.

The content of iodine or iodine compound included in the liquid mixture is not particularly limited, but is preferably from 1 to 250 g per 100 mL of the solution.

Step B

Step B is a step of precipitating a co-crystal from the reaction solution. In this step, the co-crystal formed in step A is precipitated from the reaction solution. The precipitation method is not particularly limited, and a known method can be used. For example, the method includes leaving the reaction solution obtained in step A at room temperature for a predetermined period of time. The time for leaving the reaction solution is not particularly limited but is preferably from 1 to 24 hours.

Step C

Step C: separating, from the reaction solution, the co-crystal precipitated from the reaction solution by filtration to obtain a sulfur allotrope present in the co-crystal. The filtration method is not particularly limited, and a known method can be used.

Step D

Step D is a step of purifying the co-crystal. Through this step, unintended impurities can be removed from the precipitated co-crystal. The purification method is not particularly limited, and a known method can be used. For example, the method includes dissolving the precipitated co-crystal in a solvent and performing recrystallization (recrystallisation method). The solvent is not particularly limited, and examples of the solvent include acetonitrile and dimethylformamide.

Diene rubber

The rubber composition includes a diene rubber. The diene rubber is not particularly limited, and a known diene rubber can be used. Examples of the diene rubber include natural rubber, isoprene rubber, butadiene rubber, styrene-isoprene rubber, butadiene-isoprene rubber, styrene-isoprene-butadiene rubber, and nitrile rubber. Among these, the natural rubber is preferable from the perspective of superior mechanical properties.

Optional component

The rubber composition may include a component other than the components described above as an optional component within the range in which the vulcanization reaction proceeds even in a case where the content of the zinc compound is reduced. Hereinafter, the optional component will be described in detail.

Carbon black and/or silica

The rubber composition preferably includes carbon black and/or silica. With the rubber composition including carbon black and/or silica, the rubber composition after vulcanization (hereinafter referred to as "vulcanized product) exhibits superior mechanical properties or the like.

The carbon black is not particularly limited, and a known carbon black can be used. The specific examples of the carbon black include carbon blacks such as SAF, ISAF, HAF, FEF, GPE, and SRF. One type of carbon black may be used alone, or two or more types of carbon blacks may be used in combination.

The silica is not particularly limited, and a known silica can be used. Examples of the silica include dry silica, wet silica, and colloidal silica. One type of silica may be used alone, or two or more types of silicas may be used in combination. Carbon black and silica may also be used together.

The content of the carbon black and/or silica is preferably 1 to 150 parts by mass per 100 parts by mass of the diene rubber. When the content of the carbon black and/or silica is within the range described above, a vulcanized product of the composition has superior mechanical properties. Note that, in a case where two or more types of carbon blacks are used in combination, in a case where two or more types of silicas are used in combination, and in a case where carbon black and silica are used in combination, the total amount of the carbon black and silica is preferably within the range described above.

In particular, the content of the carbon black and/or silica is preferably from 10 to 150 parts by mass per 100 parts by mass of the diene rubber from the perspective that the rubber composition has superior mechanical stress.

Vulcanization accelerator

The rubber composition may include a vulcanization accelerator. Examples of the vulcanization accelerator include aldehyde-ammonia-based, aldehyde-amine-based, thiourea-based, guanidine-based, thiazole-based, sulfenamide-based, thiuram-based, and dithiocarbamate-based vulcanization accelerators and the mixture thereof. Among these, a vulcanization accelerator including no zinc compound is preferable.

The content of the vulcanization accelerator is not particularly limited, but typically, the content is preferably from 0.1 to 5 parts by mass per 100 parts by mass of the diene rubber.

Other optional components

The rubber composition may include an optional component other than the components described above. Examples of the optional component other than the components described above include an anti-aging agent, stearic acid, a filler (excluding carbon black and silica), a plasticizer, a softener, an anti-aging agent, a UV absorbent, an antioxidant, an anti-static agent, a flame retardant, a vulcanization retarder, an aroma oil, and an adhesive aid. The optional component preferably includes no zinc compound.

Production method of rubber composition

The production method of the rubber composition is not particularly limited. The production method of the rubber composition includes a method whereby each of the above-described components is kneaded by a known method using a device (such as a Banbury mixer, kneader, and a roll).

The sulfur allotrope having from 3 to 6 atoms is present in at least one selected from the group consisting of a co-crystal, a complex, and an inclusion compound (hereinafter, also referred to as "co-crystal or the like"), and then the sulfur allotrope having 3 to 6 atoms is stabilized. Accordingly, the rubber composition is preferably obtained by mixing the components other than the sulfur allotrope (and vulcanization accelerator), adding the sulfur allotrope (and vulcanization accelerator) to the mixture, and performing mixing at 70°C to 120°C. At that time, the rotational speed, time and the like are preferably controlled as appropriate. Note that the above-described temperature is typically the same as the temperature at which $S_8$ and the vulcanization accelerator are added and mixed.

In a case where the vulcanized rubber product is produced using the rubber composition, the same temperature condition is preferably employed for rolling by a roll and formation by an extruder.

Alternatively, for the rubber composition including the sulfur allotrope having from 3 to 6 atoms, the sulfur allotrope absent in at least one selected from the group consisting of a co-crystal, a complex, and an inclusion compound, it is preferable to mix the components other than the sulfur allotrope (and vulcanization accelerator), add the sulfur allotrope (and vulcanization accelerator) to the mixture, perform mixing at 40°C or lower within 1 minute, and perform molding and vulcanization within 1 hour.

Note that the sulfur allotrope having from 3 to 6 atoms and the rubber composition are preferably stored and transported while preventing the environment from being 100°C or higher to avoid the breakage of the stable structure

or the occurrence of scorch even in a case where the sulfur allotrope having from 3 to 6 atoms is present in a co-crystal or the like.

Vulcanized rubber product

A second embodiment of the present invention is a vulcanized rubber product produced by using a rubber composition. Note that, in the present specification, the vulcanized rubber product is not particularly limited as long as it is a product including a vulcanized rubber. Examples of the vulcanized rubber product include a pneumatic tire, a conveyor belt, a hose, a golf ball, a material for civil engineering such as base isolation rubber, a sealing material for industrial use, a fender, and a medical instrument.

Rubber composition

The vulcanized rubber product is a vulcanized rubber product produced by using the above-described rubber composition. An aspect of the rubber composition is as described above.

Production method of vulcanized rubber product

The production method of the vulcanized rubber product is not particularly limited, and a known method can be used. In particular, the production method of the vulcanized rubber product preferably includes the following vulcanization step.

Vulcanization step

The vulcanization step is a step of vulcanizing the above-described rubber composition and thereby obtaining a vulcanized product. The vulcanization condition is not particularly limited. A vulcanization temperature is preferably from 140 to 200°C in that the vulcanization reaction of the rubber composition sufficiently proceeds even in a case where the content of the zinc compound is reduced. In addition, although it depends on the size of the product, vulcanization time is preferably from 2 to 30 minutes for passenger car tires. Note that the vulcanization step may be performed at the same time as the production of the rubber composition.

Production method of vulcanized rubber product

A third embodiment of the present invention is a method for producing a vulcanized rubber product, the method including:

reacting a compound represented by Formula (1) and at least one selected from the group consisting of iodine, iodine monochloride, iodine monobromide, and iodine trichloride to obtain a sulfur allotrope present in a co-crystal;
mixing the sulfur allotrope present in a co-crystal and a diene rubber to obtain a mixture of the diene rubber and the sulfur allotrope present in a co-crystal; and
heating the mixture to obtain a vulcanized diene rubber product.

The vulcanized rubber product produced by the above-described production method includes a small amount of the zinc compound and thus exhibits superior environmental applicability.

The production method of the vulcanized rubber product includes:

reacting a compound represented by Formula (1) and at least one selected from the group consisting of iodine, iodine monochloride, iodine monobromide, and iodine trichloride to obtain a sulfur allotrope present in a co-crystal (step of producing the sulfur allotrope);
mixing the sulfur allotrope present in a co-crystal and a diene rubber to obtain a mixture of the diene rubber and the sulfur allotrope present in a co-crystal (step of producing the rubber composition); and
heating the mixture to obtain a vulcanized diene rubber product (vulcanization step).

Note that, the production method of the sulfur allotrope is the same as that described as an embodiment of the production method of the sulfur allotrope present in the co-crystal. Aspects of the production method of the rubber composition and the vulcanization step are as described above.

## Examples

Hereinafter, the present invention will be further described in detail based on examples. Materials, used amount, proportion, the content of treatment, the procedure of treatment and the like described in the following examples may be appropriately changed as long as they do not deviate from the scope of the present invention. Accordingly, the scope of the present invention should not be limitedly construed by examples described below.

### Production of sulfur allotrope present in co-crystal

The sulfur allotrope present in a co-crystal was produced by the following method.

First, thiobenzamide (4 mmol) was dissolved in 15 mL of benzene to prepare a benzene solution of thiobenzamide. To the prepared benzene solution of thiobenzamide, 0.51 g of iodine was added, and the solution was then stirred at room temperature, which was 25°C, for 30 minutes.

Then, the solution was refluxed for 2 hours. The refluxed solution was left to stand at room temperature overnight. The precipitated crystal was separated from the solution by filtration and recrystallized using acetonitrile to obtain an iodide of 3,5-diphenyl-1,2,4-dithiazole-1-ium. It is known that, in the above-described compound, cyclic $S_6$ is present in a co-crystal (Journal of the Crystallographic Society of Japan, Vol.56, pp.49 to 53, 2014). The presence of each functional group was determined by Fourier Transform Infrared Spectroscopy (FT-IR) and the proportion of each element that was present was measured by elemental analysis and X-ray fluorescence. Then, the measurement results were compared with the above-described literature.

Note that the sulfur allotrope present in the co-crystal is cyclic $S_6$ and the content of cyclic $S_6$ present in the co-crystal is 19 mass%.

### Example 1

### Preparation of rubber composition

A rubber composition was produced by mixing the components listed in Table 1 using LABO PLASTOMILL available from Toyo Seiki Seisaku-sho, Ltd. At that time, the mixing temperature was 80°C and the mixing time was 3 minutes.

Note that, in Table 1, the contents of the components are represented by parts by mass relative to 100 parts by mass of the diene rubber (all of the diene rubber were natural rubber). Further, "sulfur allotrope among..." refers to the content of the sulfur allotrope present in the co-crystal, which is represented by parts by mass relative to 100 parts by mass of the diene rubber.

### Reference Examples 1 and 2, and Comparative Examples 1 to 3

Rubber compositions were produced by mixing the components listed in Table 1 with the same method as in Example 1.

### Evaluation

### Rheometer torque change

Rheometer torque (unit: dN·m) was measured using a rotorless rheometer "Curelastometer V" available from ORIENTEC Co., LTD. A test was conducted in accordance with JIS K6300-2:2001. Specifically, the rheometer torque was measured while heating the rubber composition at 180°C for 20 minutes. The variation of the rheometer torque was a value calculated from the difference between the maximum value and the minimum value among the measured values. The test was conducted two times and arithmetic average of the values were calculated. The results are shown in Table 1. Note that greater the change of the rheometer torque indicates that vulcanization proceeded further at 180°C for 20 minutes. The measurement results of rubber compositions of Example 1, Reference Example 2 and Comparative Example 3 are shown in FIG. 1.

### Network chain density (crosslinking density)

The network chain density of vulcanized product of the rubber composition (hereinafter, also referred to as "crosslinking density") was measured by the following method. Specifically, toluene was used as a swelling solvent and the network chain density was measured from the degree of swelling of the vulcanized product. Each of the rubber

compositions was vulcanized at 180°C until the degree of vulcanization reached 95% and molded to obtain a vulcanized sheet having a thickness of 2 mm. Then, 1 cm square was cut out from the vulcanized sheet and this was used as a sample. The sample was immersed in toluene for 48 hours and the volume of the sample before and after immersion was measured. The network chain density was then calculated by the following equation. Note that, the time at which the degree of vulcanization reached 95% at 180°C was determined for each rubber composition using the same test condition as that of the measurement for rheometer torque change.

$$\text{Equation: } \nu = -[V_R + \mu V_R^2 + \ln(1 - V_R)]/[Vs(V_R^{1/3} - (2/f)V_R)]$$

where v is a network chain density (× $10^{-4}$ mol/cc); $V_R$ is a volume fraction of a polymer in a vulcanized product in the state of swelling, μ is an interaction constant of natural rubber and toluene (0.42), Vs is a molecular volume of toluene (106 cc/mol), f is the number of crosslinking functional groups (4)

Crosslinking configuration

The crosslinking configuration of vulcanized product of the rubber composition was determined by the following method. Specifically, the crosslinking configuration of vulcanized product of the rubber composition was classified into a monosulfide bond, a disulfide bond, and a polysulfide bond. The proportion of each bond was calculated with the total number of the three types of bonds in the rubber composition being defined as 100%. Measurement was performed in accordance with the chemical reagent treatment method ("DETERMINATION OF CROSSLINK DENSITY AND VULCANIZATE STRUCTURE" MONSANTO.RUBBER CHEMICALS.JULY 1983) ("Development of crosslinked structure analysis (first report) test by compressive swollen method," Bridgestone Corporation, Journal of the Society of Rubber Science and Technology, Japan, Vol.60, No.5, pp.267 to 272 (1987)). The above-described method is a technique in which the proportion of crosslinking can be analyzed by selectively cutting crosslinking with different bonding forms by chemical treatment.

Note that, the content of the disulfide bond is a value obtained by subtracting the contents of the monosulfide bond and polysulfide bond from the total amount (100).

For the rubber compositions of Comparative Examples 1 to 3, the vulcanization reaction did not sufficiently proceed under the condition described above, and thus the measurement of the network chain density and crosslinking configuration failed (in Table 1, recorded as "measurement failed").

The results above show that the content of the monosulfide bond is greater in the vulcanized product of rubber composition of Example 1 compared to the vulcanized products of rubber compositions of Reference Examples 1 and 2. The vulcanized product with the crosslinking configuration having a large number of monosulfide bonds is known to have excellent anti-aging properties and excellent anti-permanent compression deformation. It is therefore presumed that, with the rubber composition including 100 parts by mass of a diene rubber and from 0.01 to 10 parts by mass of a sulfur allotrope having from 3 to 6 atoms, the vulcanization reaction sufficiently proceeds as well as the obtained vulcanization product has superior anti-aging properties and superior anti-permanent compression deformation even in a case where the content of the zinc compound is reduced.

[Table 1]

| Table 1 | Reference Example 1 | Reference Example 2 | Example 1 | Comparative Example 1 | Comparative Example 2 | Comparative Example 3 |
|---|---|---|---|---|---|---|
| Natural rubber | 100 | 100 | 100 | 100 | 100 | 100 |
| Sulfur ($S_8$) | | 0.5 | | | 0.5 | 0.5 |
| Co-crystal Among sulfur components | | | 2.7 (0.5) | | | |
| Thiobenzamide | | | | | | 2.2 |
| Accelerator TT | 3 | | | 3 | | |
| Accelerator CZ | | 0.5 | | | 0.5 | |
| zinc oxide | 3 | 3 | | | | |
| Rheometer torque change (dNm) | 3.32 | 2.81 | 6.88 | 1.35 | 0.815 | 0.702 |
| Crosslinking density ($\times 10^{-4}$ mol/cc) | 1.1 | 0.69 | 2.2 | Unmeasureable | Unmeasureable | Unmeasureable |
| Crosslinking configuration | | | | | | |
| Monosulfide bond (%) | 54 | 24 | 83 | Unmeasureable | Unmeasureable | Unmeasureable |
| Disulfide bond (%) | 21 | 33 | 10 | | | |
| Polysulfide bond (%) | 25 | 43 | 7 | | | |

The abbreviation and product name and the like of the components listed in Table 1 are described below.

- Natural rubber: SIR20 (PT. NUSIRA)
- Sulfur $S_8$: "Golden Flower" sulfur fine powder (available from Tsurumi Chemical Industry Co., Ltd.)
- Accelerator TT: "NOCCELER TT-P" (tetramethylthiuram disulfide, thiuram-based vulcanization accelerator, available from Ouchi Shinko Chemical Industrial Co., Ltd.)
- Accelerator CZ: "NOCCELER CZ-G" (N-cyclohexyl-2-benzothiazolyl sulfenamide, sulfenamide-based vulcanization accelerator, available from Ouchi Shinko Chemical Industrial Co., Ltd.)
- Zinc oxide: Zinc Oxide III (available from Seido Chemical Industry Co., Ltd.)

From the results shown in Table 1, it was found that, with the rubber composition of Example 1, which included 100 parts by mass of the diene rubber and from 0.01 to 10 parts by mass of the sulfur allotrope having from 3 to 6 atoms, the vulcanization reaction sufficiently proceeded in the time scale for producing a vulcanized rubber product even in a case where the content of the zinc compound was reduced (in the case of including no zinc compound).

Note that Example 1 exhibits a superior rheometer torque change and superior network chain density compared to Reference Examples 1 and 2. Accordingly, it was found that the vulcanized product of rubber composition of Example 1 had higher network chain density (crosslinking density) than that of vulcanized products of the rubber compositions including zinc oxide (Reference Examples 1 and 2).

It was found that, with the rubber compositions of Comparative Examples 1 to 3, which included no sulfur allotrope having from 3 to 6 atoms, the vulcanization reaction did not proceed in the time scale for producing a vulcanized rubber product.

Reference Signs List

101 Vulcanization curve for rubber composition of Example 1
102 Vulcanization curve for rubber composition of Reference Example 2
103 Vulcanization curve for rubber composition of Comparative Example 3

## Claims

1. A rubber composition comprising:

   100 parts by mass of a diene rubber; and
   from 0.01 to 10 parts by mass of a sulfur allotrope having from 3 to 6 atoms.

2. The rubber composition according to claim 1, wherein the sulfur allotrope is present in at least one selected from the group consisting of a co-crystal, a complex, and an inclusion compound.

3. The rubber composition according to claim 2, wherein the co-crystal is a co-crystal formed by reacting a compound represented by Formula (1) and at least one selected from the group consisting of iodine, iodine monochloride, iodine monobromide, and iodine trichloride

   [Chemical Formula 2]

   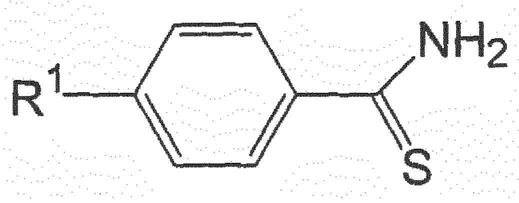

   (1)

   where $R^1$ represents a monovalent organic group.

4. The rubber composition according to any one of claims 1 to 3, wherein the sulfur allotrope is a cyclic sulfur.

**5.** The rubber composition according to any one of claims 1 to 4, wherein the number of atoms in the sulfur allotrope is 6.

**6.** The rubber composition according to any one of claims 1 to 5, further comprising from 1 to 150 parts by mass of at least one selected from the group consisting of carbon black and silica per 100 parts by mass of the diene rubber.

**7.** A vulcanized rubber product obtained by using the rubber composition described in any one of claims 1 to 6.

**8.** A method for producing a vulcanized rubber product, the method comprising:

reacting a compound represented by Formula (1) and at least one selected from the group consisting of iodine, iodine monochloride, iodine monobromide, and iodine trichloride to obtain a sulfur allotrope present in a co-crystal;
mixing the sulfur allotrope present in the co-crystal and a diene rubber to obtain a mixture of the diene rubber and the sulfur allotrope present in the co-crystal; and
heating the mixture to obtain a vulcanized diene rubber product

[Chemical Formula 1]

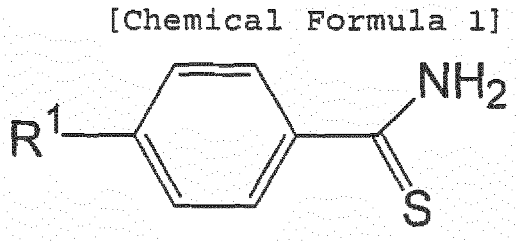

(1)

where $R^1$ represents a monovalent organic group.

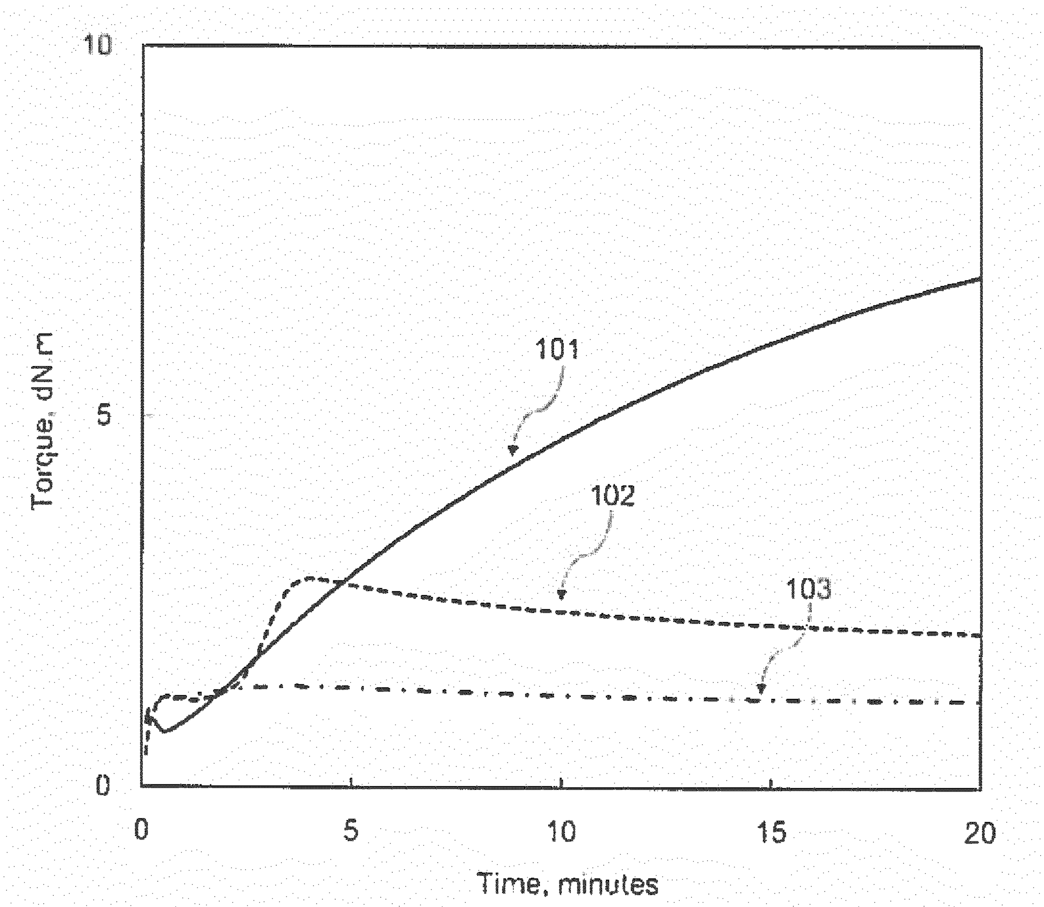


FIG. 1

**INTERNATIONAL SEARCH REPORT**

International application No.
PCT/JP2017/015170

A. CLASSIFICATION OF SUBJECT MATTER
*C08L7/00*(2006.01)i, *C08K3/06*(2006.01)i, *C08L9/00*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | SUGIMOTO, Kunihisa et al., Air-Stables Cyclohexasulfur as Cocrystal, CRYSTAL GROWTH & DESIGN, 2013, Vol.13, No.2, p.433-436, ISSN 1528-7483, particularly, page 433, left column, line 2 | 1-8 |
| X | Kunihisa SUGIMOTO et al., "Air-Stable Cyclohexasulfur in Cocrystal", Journal of the Crystallographic Society of Japan, 2014, vol. 56, no.1, pages 49 to 53, ISSN 0369-4585, particularly, page 49, right column, 11th to 9th lines from the bottom | 1-8 |
| A | JP 52-69454 A (Bridgestone Tire Co., Ltd.), 09 June 1977 (09.06.1977), claims (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 July 2017 (04.07.17) | 11 July 2017 (11.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/015170

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-531788 A (Lanxess Deutschland GmbH), 05 November 2015 (05.11.2015), & US 2015/0240053 A1 & WO 2014/044514 A1 & EP 2711198 A1 | 1-8 |
| A | JP 48-826 A (Director General, Agency of Industrial Science and Technology), 08 January 1973 (08.01.1973), (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006193621 A


### Non-patent literature cited in the description


- *Journal of the Crystallographic Society of Japan,* 2014, vol. 56 (5), 323
- *Journal of the Crystallographic Society of Japan,* 2014, vol. 56, 49-53
- Development of crosslinked structure analysis (first report) test by compressive swollen method. Journal of the Society of Rubber Science and Technology. Bridgestone Corporation, 1987, vol. 60, 267-272